Europäisches Patentamt

European Patent Office

Office européen des brevets

(19)

(11) Veröffentlichungsnummer: **0 274 647 B1**

(12) **EUROPÄISCHE PATENTSCHRIFT**

(45) Veröffentlichungstag der Patentschrift: 27.12.91

(21) Anmeldenummer: 87117833.1

(22) Anmeldetag: 02.12.87

(51) Int. Cl.⁵: **H04L 25/38**, H04J 3/16, H04L 25/36

(54) Verfahren und Anordnung zur Übertragung eines Digitalsignals niederer Bitrate in einem für eine höhere Bitrate vorgesehenen Zeitabschnitt eines Zeitmultiplexsignals.

(30) Priorität: 19.12.86 DE 3643561

(43) Veröffentlichungstag der Anmeldung:
20.07.88 Patentblatt 88/29

(45) Bekanntmachung des Hinweises auf die
Patenterteilung:
27.12.91 Patentblatt 91/52

(84) Benannte Vertragsstaaten:
AT BE CH DE ES FR GB GR IT LI NL SE

(56) Entgegenhaltungen:
DE-A- 1 462 579
DE-B- 2 521 731
US-A- 3 548 309
US-A- 4 053 708

BELL SYSTEM TECHNICAL JOURNAL, Band
61, Nr. 9, Teil 3, November 1982, Seiten
2721-2740, American Telephone and Telegraph Co., Murrax Hill New Jersey, US; T.J.
APRILLE et al.: "Dataport - Channel units for
digital data system subrates"

(73) Patentinhaber: SIEMENS AKTIENGESELL-
SCHAFT
Wittelsbacherplatz 2
W-8000 München 2(DE)

(72) Erfinder: Römpp, Claus, Dipl.-Ing.
Engelhardstrasse 34
W-8000 München 70(DE)

## Beschreibung

Verfahren und Anordnung zur Übertragung eines Digitalsignals niederer Bitrate in einem für eine höhere Bitrate vorgesehenen Zeitabschnitt eines Zeitmultiplexsignals

Die Erfindung bezieht sich auf ein Verfahren und eine Anordnung zur Übertragung eines Digitalsignals in einem Zeitabschnitt des Pulsrahmens eines Zeitmultiplexsignals, für das zur Übertragung in diesem Zeitabschnitt eine höhere Bitrate zur Verfügung gestellt wird, als das Digitalsignal aufweist.

Aus der Zeitschrift telcom report, 2(1979) Beiheft Digital-Übertragungstechnik, Seiten 46 - 51 ist ein Digitalsignal-Primärmultiplexgerät bekannt, bei dem zweiunddreißig synchrone 64-kbit/s-Signale zu einem 2048-kbit/s-Zeitmultiplexsignal zusammengefaßt werden können.

Aus der deutschen Offenlegungsschrift 1 462 579 ist ein Nachrichtenübertragungssystem bekannt, bei dem sendeseitig RZ-Digitalsignale zu einem Zeitmultiplexsignal verschachtelt und bei dem empfangsseitig dieses Zeitmultiplexsignal wieder in einzelne RZ-Digitalsignale aufgespalten wird. Dazu werden sendeseitig die RZ-Digitalsignale in NRZ-Digitalsignale umgesetzt, die zur Vermeidung von Informationsverlust beim Verschachteln und Trennen asynchroner Signale mit einer höheren Frequenz zur Bildung des Zeitmultiplexsignals abgetastet werden. Eine Übertragung von Digitalsignalen niederer Bitrate in einem für eine höhere Bitrate vorgesehenen Zeitabschnitt des Zeitmultiplexsignals ist nicht vorgesehen.

Aus der US-PS 3 548 309 ist weiter ein Datenratenumsetzer bekannt, bei dem bei jeder unerwünschten Doppelabtastung eine Phasenanpassung vorgenommen wird.

Aus der deutschen Auslegeschrift 25 21 731 ist schließlich ein Verfahren zur sendeseitigen asynchronen Übernahme, Übertragung und empfangsseitiger Übergabe digitaler Signale bekannt, bei dem an der Sendeseite bitparallel eintreffende Signale zusammen mit einer Synchronisierinformation parallel in ein Senderegister gelangen und von dort bitseriell ausgesendet werden und bei dem auf der Empfangsseite die bitseriell ankommenden Signale in ein Empfangsregister gelangen und über ein Ausgaberegister bitparallel auf ein Datenausgabegerät übergeben werden.

Aufgabe der Erfindung ist es, ein Verfahren und eine Anordnung anzugeben, mit denen statt eines 64-kbit/s-Signals auch einmal ein Digitalsignal einer Bitrate zwischen 0,6 und 19,2 kbit/s verlustfrei und mit möglichst geringem schaltungstechnischem Aufwand übertragen werden kann. Bei synchroner Übertragung sollen keine Zeichenverzerrungen auftreten.

Ausgehend von einem Verfahren der eingangs geschilderten Art wird diese Aufgabe erfindungsgemäß dadurch gelöst, daß das erste Digitalsignal sendeseitig mit einem diesem Zeitabschnitt zugehörigen ersten Takt überabgetastet wird, daß ein aus der Überabtastung gewonnenes zweites Digitalsignal im Zeitmultiplexsignal übertragen wird und daß empfangsseitig nach einem Demultiplexen das zweite Digitalsignal mit einem der Bitrate entsprechenden zweiten Takt unter Aussparung von verbotenen Phasenlagenbereichen abgetastet wird, bei deren Nichtbeachtung Doppelabtastungen auftreten würden.

Vorteilhaft ist es dabei, wenn zur Bildung eines die verbotenen Phasenlagenbereiche durch Impulse überlappend sperrenden Pulses das zweite Digitalsignal um eine Periode des ersten Taktes verzögert und als drittes Digitalsignal weiterverarbeitet wird, das zweite Digitalsignal um zwei Perioden des ersten Taktes verzögert und als viertes Digitalsignal bezeichnet wird und das zweite und vierte Digitalsignal einer Antivalenz-Verknüpfung unterworfen werden.

Weitere vorteilhafte Verfahrensschritte sowie Anordnungen zur Durchführung des Verfahrens sind den abhängigen Ansprüchen zu entnehmen.

Anhand von Ausführungsbeispielen wird die Erfindung nachstehend näher erläutert:

| Figur 1 | zeigt die Abtastung des ersten und zweiten Digitalsignals, |
| Figur 2 | zeigt die verbotenen Phasenlagen, |
| Figur 3 | zeigt die Bildung von die verbotenen Phasenlagen überlappenden Impulsen, |
| Figur 4a | zeigt eine sendeseitige Anordnung zur Durchführung des erfindungsgemäßen Verfahrens, |
| Figur 4b | zeigt eine erste empfangsseitige Anordnung zur Durchführung des erfindungsgemäßen Verfahrens, |
| Figur 5 | zeigt eine Logik aus der Anordnung nach Fig. 4 detailliert, |
| Figur 6 | zeigt eine zweite empfangsseitige Anordnung zur Durchführung des erfindungsgemäßen Verfahrens und |
| Figur 7 | zeigt einen Pulsplan zu einer Fehlerkorrektureinrichtung in der Anordnung nach Fig. 6. |

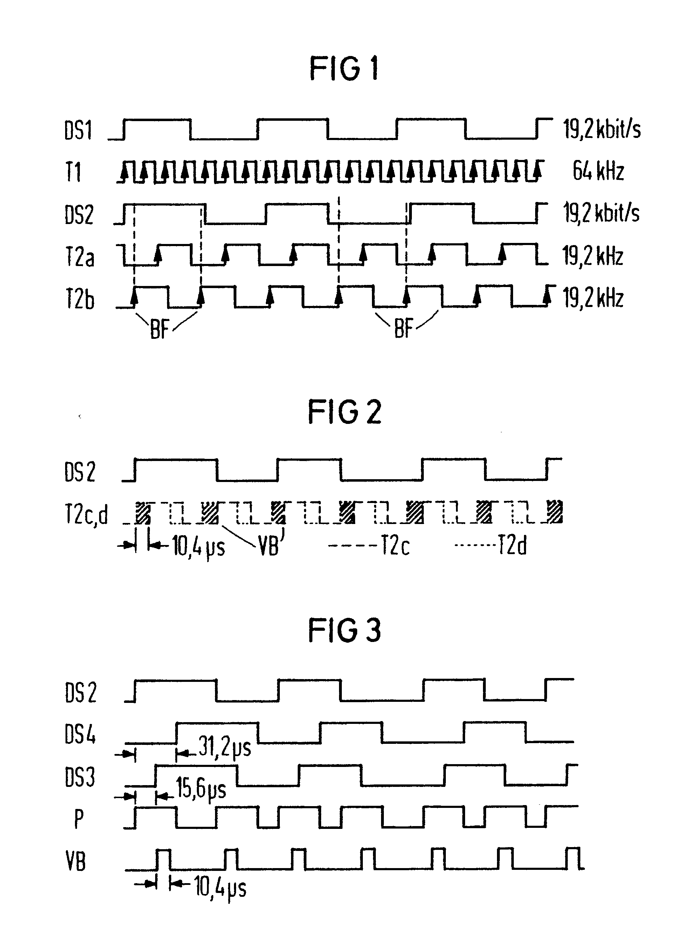

Figur 1 zeigt ein Digitalsignal DS1 einer Bitrate von 19,2 kbit/s. Dieses wird durch einen Takt T1 einer Frequenz von 64 kHz abgetastet, wodurch ein Digitalsignal DS2 entsteht, das übertragen wird. Empfangsseitig wird dieses durch einen Takt T2 einer Frequenz von 19,2 kHz abgetastet, wobei die Pfeile die wirksamen Flanken kennzeichnen. Mit T2a und T2b sind zwei Phasenlagen des Taktes T2 bezeichnet. Mit dem Takt T2a ist eine einwandfreie Abtastung des Digitalsignals DS2 möglich. Bei einer Abtastung durch den Takt T2b entstehen Bitfehler BF durch eine gelegentliche Doppelabtastung.

Figur 2 zeigt das Digitalsignal DS2 und zwei Phasenlagen T2c und T2d des Taktes T2, die den schraffiert dargestellten Bereich von Phasenlagen einschließen, bei dem Doppelabtastungen möglich sind. Diese Bereiche werden als verbotene Phasenlagenbereiche VB bezeichnet.

Figur 3 zeigt ein Verfahren zur Gewinnung eines Pulses P, dessen Impulse die verbotenen Phasenlagenbereiche VB überdecken. Dazu wird das Digitalsignal DS2 einmal zur Gewinnung eines Digitalsignals DS3 um eine Periode des Taktes T1 und zum anderen zur Erzeugung eines Digitalsignals DS4 um zwei Perioden des Taktes T1 verschoben. Der Puls P wird durch eine Antivalenz-Verknüpfung aus den Digitalsignalen DS2 und DS4 abgeleitet. Das Digitalsignal DS3 wird anstelle des Digitalsignals DS2 weiterverarbeitet. Die verbotenen Phasenlagenbereiche VB sind unten dargestellt.

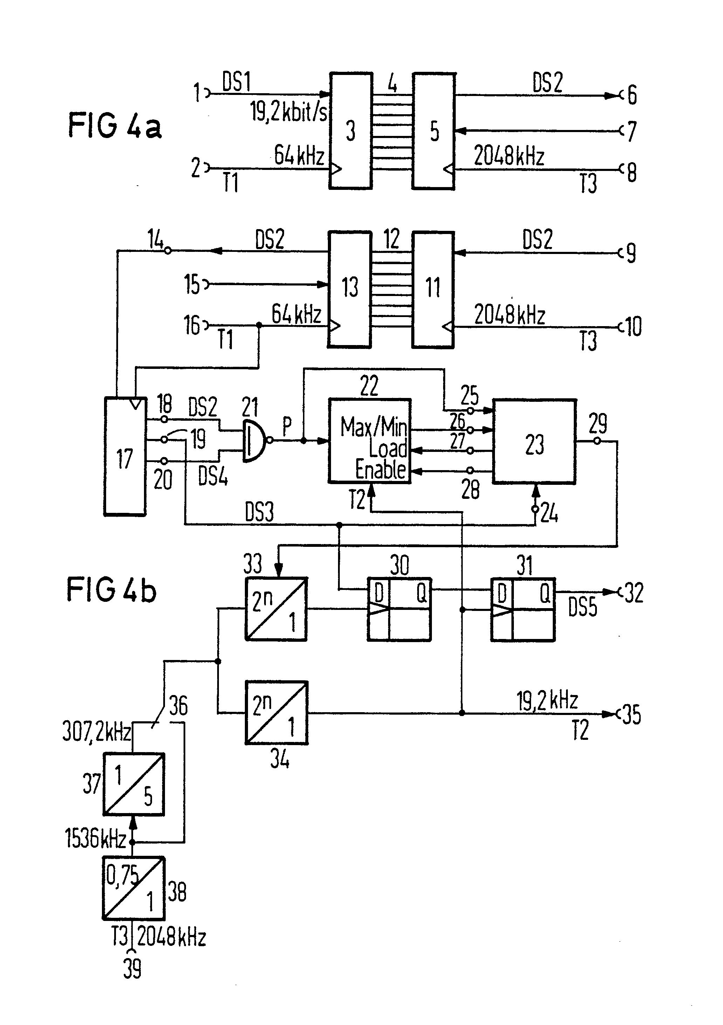

Figur 4a zeigt eine sendeseitige Anordnung zur Durchführung des erfindungsgemäßen Verfahrens. Die Anordnung enthält ein Schieberegister 3 zur Seriell-Parallel-Umsetzung, ein Schieberegister 5 zur Parallel-Seriell-Umsetzung sowie ein beide Schieberegister 3 und 5 verbindendes Leitungsbündel 4.

Wird an den Eingang 1 ein Digitalsignal DS1 einer Bitrate von 19,2 kbit/s angelegt, so wird dieses mit dem Takt T1 einer Frequenz von 64 kHz am Eingang 2 seriell-parallel umgesetzt und dem Schieberegister 5 zugeführt. Dort wird es mit dem Takt T3 einer Frequenz von 2048 kHz am Eingang 8 ausgelesen, wenn am Eingang 7 ein Kanalauswahlsignal für einen der einunddreißig Kanäle des 2048-kbit/s-Zeitmultiplexsignals, in denen Datenübertragung möglich ist, vorliegt. Das Digitalsignal DS2 wird über den Ausgang 6 ausgesendet.

Figur 4b zeigt eine empfangsseitige Anordnung zur Durchführung des erfindungsgemäßen Verfahrens. Diese Anordnung enthält Schieberegister 11, 13 und 17, ein Exklusiv-NOR-Gatter 21, einen Aufwärts-/Abwärts-Zähler 22, eine Logik 23, D-Flipflops 30 und 31, Frequenzteiler 33, 34, 37 und 38 sowie einen Umschalter 36.

Figur 5 zeigt die Logik 23 detailliert. Sie enthält UND-Gatter 40, 42 und 47, einen Inverter 41, D-Flipflops 43, 44, 45 und 48 sowie ein Exklusiv-ODER-Gatter 46.

Ein empfangenes und in einem Demultiplexer separiertes Digitalsignal DS2 wird in Figur 4b über den Eingang 9 dem Schieberegister 11 zugeführt und dort mit dem Takt T3 am Eingang 10 seriell-parallel umgesetzt und über das Verbindungsleitungsbündel 12 in das Schieberegister 13 eingegeben. Aus diesem wird es bei Anliegen eines Kanalauswahlsignals am Eingang 15 mit dem Takt T1 am Eingang 16 über den Ausgang 14 ausgelesen und in das Schieberegister 17 ebenfalls mit dem Takt T1 eingegeben. Dort erfolgen die anhand der Figur 3 beschriebenen Verzögerungen. Am Ausgang des Exklusiv-NOR-Gatters 21 erscheint der Puls P, der in seinen Impulspausen die Wirkung eines Fensters für den Takt T2 hat. Dieser schiebt das Digitalsignal DS3 durch die D-Flipflops 30 und 31 als Digitalsignal DS5 zum Ausgang 32, solange die Logik 23 nicht über ihren Ausgang 29 ein Löschsignal an den Frequenzteiler 33 abgibt und damit eine Änderung der Phasenlage bewirkt.

Der Takt T2 wird aus dem am Eingang 39 anliegenden Takt T3 der Frequenz 2048 kHz erzeugt, indem diese zuerst im Frequenzteiler 38 auf eine Frequenz von 1536 kHz geteilt und dann je nach Stellung des Umschalters 36 direkt oder nach nochmaliger Teilung im Frequenzteiler 37 auf eine Frequenz von 307,2 kHz an die Eingänge der Frequenzteiler 33 und 34 geleitet wird, die im Verhältnis $2^n:1$ teilen. Mit dieser Takteinrichtung lassen sich Frequenzen von 0,75 kHz, 1,5 kHz, 3 kHz, 6 kHz, 12 kHz, 0,6 kHz, 1,2 kHz, 2,4 kHz, 4,8 kHz, 9,6 kHz und 19,2 kHz erzeugen. Im Ausführungsbeispiel ist letztere ausgewählt.

Da während der Übertragung des Digitalsignals DS2 Bitfehler BF auftreten können, ist es nicht sinnvoll, jedesmal, wenn der Abtastzeitpunkt in einen verbotenen Phasenlagenbereich fällt, mit einer sofortigen Neusynchronisation des Abfragezeitpunktes zu reagieren, insbesondere da dieser Bereich auch durch die Bitfehler BF verändert wird. Es wurde daher der Aufwärts-/Abwärts-Zähler 22 vorgesehen, der von der Abtastflanke getaktet wird. Seine Zählrichtung hängt von dem Fenster um die Datenflanken ab. Ist der Puls P im Zustand logisch "L" (niedriger Pegel), was bei Doppelabtastung möglich ist, so wird aufwärts gezählt. Ist der Puls P im Zustand logisch "H" (hoher Pegel), in dem keine Fehler möglich sind, so wird abwärts gezählt.

Werden lauter positive Ereignisse, bei denen keine Doppelabtastung möglich ist, gezählt, so erhält beim Zählwert "0" der Max-/Min-Ausgang und damit der Eingang 26 des UND-Gatters 40 den Zustand logisch "H". Über die Logik 23 wird ein weiteres Abwärtszählen des Aufwärts-/Abwärts-Zählers 22 verhindert, so daß er beim Zählwert "0" so lange stehen bleibt bis wieder aufwärts gezählt wird.

Treten hintereinander mehrere negative Ereignisse auf, bei denen eine Doppelabtastung möglich ist, so zählt der Aufwärts-/Abwärts-Zähler 22 so lange aufwärts, bis ein Zählwert "9" erreicht wird. Bei diesem Wert geht der Max-/Min-Ausgang und damit der Eingang 26 auf den logischen Zustand "H" über. Jetzt wird einerseits die Abtastfrequenz neu synchronisiert und andererseits in den Aufwärts-/Abwärts-Zähler ein Anfangszählwert geladen.

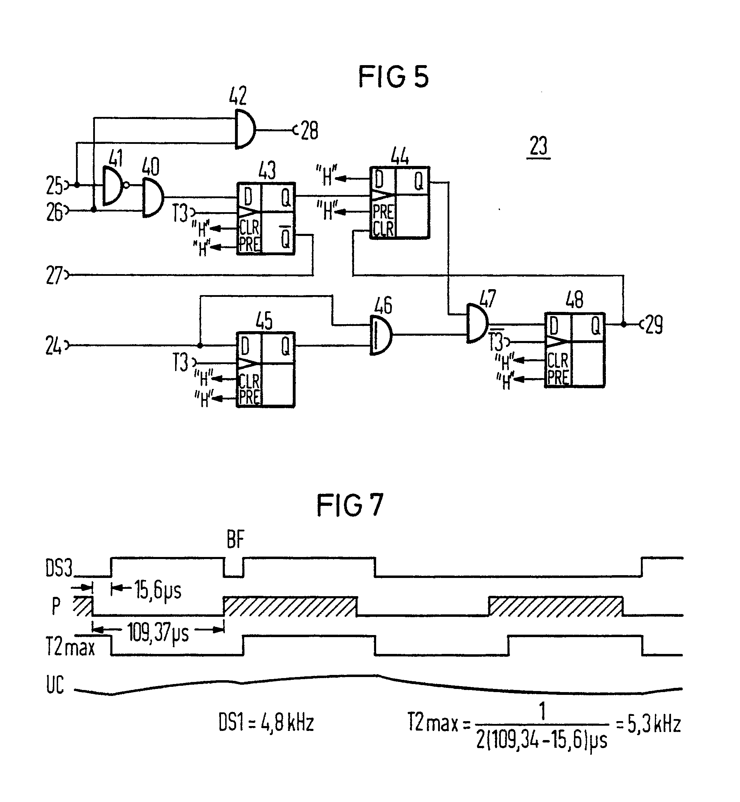

Die Logik 23, die in Fig. 5 detailliert dargestellt ist, wirkt wie folgt: Am Eingang 25 des Inverters 41 liegt der das Fenster bildende Puls P. Am Ausgang des Inverters 41 und damit an einem Eingang des UND-Gatters 40 liegt somit der invertierte Puls $\overline{P}$ und am Eingang 26 dieses UND-Gatters 40 ein Impuls sowohl beim Zählwert "0" des Aufwärts-/Abwärts-Zählers 22 als auch bei dessen Zählwert "9". Liegen bei negativen Ereignissen beide Eingänge auf einem logischen Zustand "H", dann tritt auch am Ausgang des UND-Gatters 40 ein solcher auf. Der Ausgang 28 des UND-Gatters 42, der zum Takt-Steuer (Enable)-Eingang des Aufwärts-/Abwärts-Zählers 22 führt, erhält dagegen dann einen logischen Zustand "H", wenn der logische Zustand am Eingang 25 "H" und am Eingang 26 "H" ist. Dies ist dann der Fall, wenn aufgrund des Pulses P Fehler unmöglich sind und der Zählwert des Aufwärts-/ Abwärts-Zählers 22 den Zählwert "0" aufweist. Bei negativen Ereignissen erlangt der Ausgang 28 dagegen einen logischen Zustand "L".

Liegt am D-Eingang des D-Flipflops 43 ein logischer Zustand "H", dann erhält der Q-Ausgang mit dem Takt T3 auch den logischen Zustand "H" und der $\overline{Q}$-Ausgang gibt einen logischen Zustand "L" zum Ausgang 27 und über diesen zum Setz (Load)-Eingang des Aufwärts-/Abwärts-Zählers 22. Der logische Zustand "H" am Q-Ausgang kippt das D-Flipflop 44, so daß dessen Q-Ausgang ebenfalls den logischen Zustand "H" erreicht.

Das am Eingang 24 anliegende Digitalsignal DS3 wird im Zusammenwirken des D-Flipflops 45 und des Exklusiv-ODER-Gatters 46 differenziert. Das D-Flipflop 45 verzögert dabei das Digitalsignal DS3 mit dem Takt T3. Liegt an beiden Eingängen des UND-Gatters 47 ein logischer Zustand "H", wie es bei Überlauf des Aufwärts-/Abwärts-Zählers 22 auftritt, dann wird dieser Zustand über das auf den invertierten Takt $\overline{T3}$ synchronisierte D-Flipflop 48 zum Ausgang 29 durchgeschaltet. Dort bewirkt dieser Zustand die Rücksetzung zum einen des D-Flipflops 44 und zum anderen des Frequenzteilers 33.

Zur Neusynchronisation des Taktes T2 der Frequenz von 19,2 kHz wird der Frequenzteiler 33 mit einer beliebigen Datenflanke gelöscht. Nach dem Löschvorgang folgt die Impulspause des Taktes T2 und dann der Übergang von der Impulspause auf den Impuls. Dieser ist demnach zeitlich um etwa eine halbe Periodendauer von der den Vorgang auslösenden Datenflanke entfernt. Der Anfangswert wird geladen, um bei einer neuen Synchronisation, die wiederum zu Doppelabtastungen führen könnte, schneller den Zählwert "9" zu erreichen, damit ein neuer Aufsynchronisiervorgang ermöglicht wird.

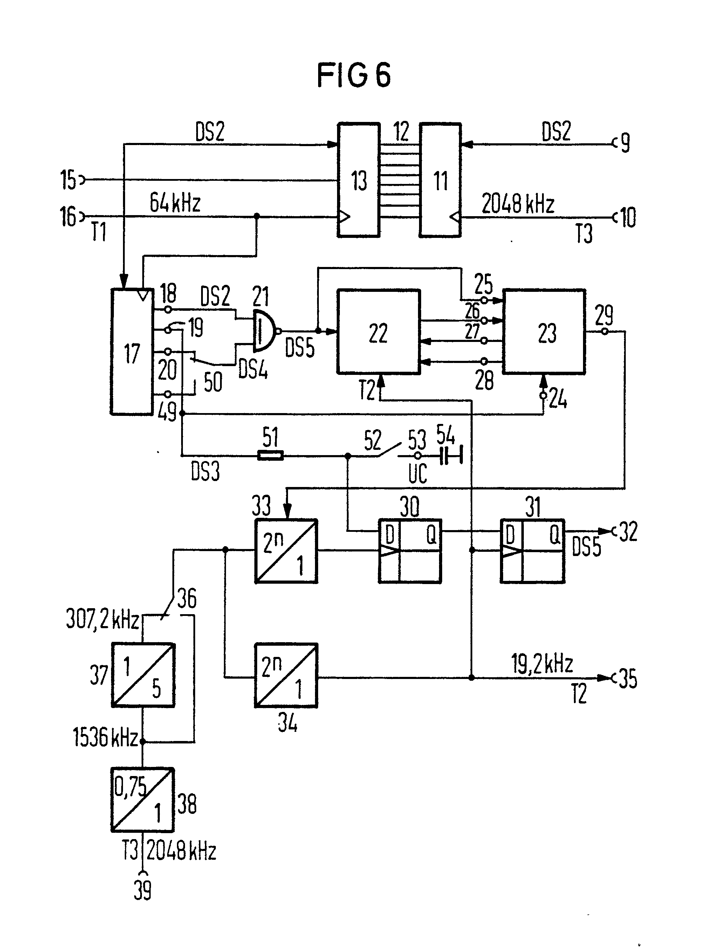

Figur 6 zeigt eine weitere empfangsseitige Anordnung zur Durchführung des erfindungsgemäßen Verfahrens. Diese enthält gegenüber der in Figur 4b zusätzlich einen Umschalter 50, einen Widerstand 51, einen Schalter 52 und einen Kondensator 54.

Diese zusätzlichen Bauelemente ergeben eine Fehlerkorrekturmöglichkeit für ein Digitalsignal DS3 einer Bitrate von 4,8 kbit/s und kleiner. Bei der Fehlerkorrektur wird ausgeschlossen, daß ein bei der Übertragung des 64-kbit/s-Datenstromes im Zeitmultiplexsignal verfälschtes Bit BF, das zufällig im Abtastzeitpunkt liegt, ein ganzes Bit des Digitalsignals DS3 niederer Bitrate verfälscht. Dazu wird der Kondensator 54 von dem Digitalsignal DS3 auf- bzw. entladen. Da dieser Kondensator 54 ein integrierendes Bauelement ist, bestimmen immer mehrere Impulse des Digitalsignals DS3 seine Ladung im Abtastzeitpunkt.

Für die Fehlerkorrektur wird der erlaubte Abtastbereich des Fensters verkleinert. Dazu wird über den Umschalter 50 ein am Ausgang 49 des Schieberegisters 17 weiter verzögertes Digitalsignal als das am Ausgang 20 an das Exklusiv-NOR-Gatter 21 angelegt.

Figur 7 zeigt das Digitalsignal DS3, den veränderten Puls P, den Takt T2 mit der hier maximal zulässigen Frequenz von 5,3 kHz und die Kondensatorspannung UC am Meßpunkt 53.

**Patentansprüche**

1. Verfahren zur Übertragung eines ersten Digitalsignals (DS1) in einem Zeitabschnitt des Pulsrahmens eines Zeitmultiplexsignals, für das zur Übertragung in diesem Zeitabschnitt eine höhere Bitrate zur Verfügung gestellt wird als das erste Digitalsignal (DS1) aufweist, **dadurch gekennzeichnet,** daß das erste Digitalsignal (DS1) sendeseitig mit einem diesem Zeitabschnitt zugehörigen ersten Takt (T1) überabgetastet wird, daß ein aus der Überabtastung gewonnenes zweites Digitalsignal (DS2) im Zeitmultiplexsignal übertragen wird und daß empfangsseitig nach einem Demultiplexen das zweite Digitalsignal (DS2) mit einem dessen Bitrate entsprechenden zweiten Takt (T2) unter Aussparung von verbotenen Phasenlagenbereichen (VB) abgetastet wird, bei deren Nichtbeachtung Doppelabtastungen auftreten würden.

2. Verfahren nach Anspruch 1, **dadurch gekennzeichnet,** daß zur Bildung eines die verbotenen Phasenlagenbereiche (VB) durch Impulse überlappend sperrenden Pulses (P) das zweite Digitalsignal (DS2) um eine Periode des ersten Taktes (T1) verzögert und als drittes Digitalsignal (DS3) weiterverarbeitet wird, das zweite Digitalsignal (DS2) um zwei Perioden des ersten Taktes (T1) verzögert und als viertes Digitalsignal (DS4) bezeichnet wird und das zweite (DS2) und vierte (DS4) Digitalsignal einer Antivalenz-Verknüpfung unterworfen werden.

3. Verfahren nach Anspruch 1,
**dadurch gekennzeichnet,**
daß der zweite Takt (T2) aus einem dritten Takt (T3) des Zeitmultiplexsignals (ZS) abgeleitet wird.

4. Verfahren nach Anspruch 1, 2 oder 3,
**dadurch gekennzeichnet,**
daß für das erste Digitalsignal (DS1) eine Bitrate zwischen 0,6 und 19,2 kbit/s und für den ersten Takt (T1) eine Frequenz von 64 kHz gewählt wird.

5. Verfahren nach Ansprüchen 3 und 4,
**dadurch gekennzeichnet,**
daß der zweite Takt (T2) aus einem 2048-kHz-Takt (T3a) des Zeitmultiplexsignals durch eine Multiplikation mit 3/4 (1536 kHz) und eine anschließende Division durch $2^n$ mit $n = 7,8,9,10$ und 11 (0,75 kHz, 1,5 kHz, 3 kHz, 6 kHz, 12 kHz) abgeleitet wird.

6. Verfahren nach Ansprüchen 3 und 4,
**dadurch gekennzeichnet,**
daß der zweite Takt (T2) aus einem 2048-kHz-Takt (T3a) des Zeitmultiplexsignals durch eine Multiplikation mit 3/4 (1536 kHz), eine anschließende Division durch fünf (307,2 kHz) und eine abschließende Division durch $2^n$ mit $n = 4,5,6,7,8$ und 9 (0,6 kHz, 1,2 kHz, 2,4 kHz, 4,8 kHz, 9,6 kHz, 19,2 kHz) abgeleitet wird.

7. Verfahren nach einem der vorhergehenden Ansprüche,
**dadurch gekennzeichnet,**
daß bei einer definierten Anzahl von in verbotene Phasenlagenbereiche (VB) fallenden Abtastzeitpunkten eine Neusynchronisation vorgenommen wird.

8. Anordnung zur Durchführung des Verfahrens nach Anspruch 1 oder 2 unter Verwendung von Seriell-Parallel- und Parallel-Seriell-Umsetzern,
**dadurch gekennzeichnet,**
daß sendeseitig ein erstes Schieberegister (3) für eine Seriell-Parallel-Umsetzung des ersten Digitalsignals (DS1) mit dem ersten Takt (T1) und anschließend ein zweites Schieberegister (5) für eine Parallel-Seriell-Umsetzung des zweiten Digitalsignals (DS2) mit dem dritten Takt (T3) bei freigegebenem Kanal des Zeitmultiplexsignals (ZS) vorgesehen ist,
daß empfangsseitig ein drittes Schieberegister (11) für eine Seriell-Parallel-Umsetzung des zweiten Digitalsignals (DS2) mit dem dritten Takt (T3) vorgesehen ist,
daß anschließend ein viertes Schieberegister (13) für eine Parallel-Seriell-Umsetzung des zweiten Digitalsignals (DS2) mit dem ersten Takt (T1) bei freigegebenem Kanal des Zeitmulplexsignals (ZS) vorgesehen ist,
daß anschließend ein fünftes Schieberegister (17) für eine Verzögerung des zweiten Digitalsignals (DS2) mit dem ersten Takt (T1) mit einem ersten Ausgang (18) für das zweite Digitalsignal (DS2), mit einem zweiten Ausgang (19) für das dritte Digitalsignal (DS3) und mit einem dritten Ausgang (20) für das vierte Digitalsignal (DS4) vorgesehen ist,
daß ein Exklusiv-NOR-Gatter (21) vorgesehen ist, dessen erster Eingang mit dem ersten Ausgang (18) und dessen zweiter Eingang mit dem dritten Ausgang (20) des fünften Schieberegisters (17) verbunden sind,
daß ein Aufwärts/Abwärtszähler (22) vorgesehen ist, dessen Eingang mit dem Ausgang des ersten Exklusiv-NOR-Gatters (21) verbunden ist,
daß eine Logik (23) vorgesehen ist, deren erster Eingang (24) mit dem zweiten Ausgang (19) des fünften Schieberegisters (17), deren zweiter Eingang (25) mit dem Ausgang des Exklusiv-NOR-Gatters (21), deren dritter Eingang (26) mit dem Maximum/Minimum-Ausgang des Aufwärts/Abwärtszählers (22), deren erster Ausgang (27) mit dem Setz(Load)-Eingang des Aufwärts/Abwärts-Zählers (22) und deren zweiter Ausgang (28) mit dem Takt-Steuer(Enable)-Eingang des Aufwärts-/Abwärts-Zählers (22) verbunden sind,
daß ein erstes D-Flipflop (30) vorgesehen ist, dessen D-Eingang mit dem zweiten Ausgang (19) des fünften Schieberegisters (17) verbunden ist,
daß ein zweites D-Flipflop (31) vorgesehen ist, dessen D-Eingang mit dem Q-Ausgang des ersten D-Flipflops (30) verbunden ist und dessen Q-Ausgang als Ausgang (32) für ein fünftes Digitalsignal (DS5) dient, und
daß eine Taktzentrale mit zwei ausgangsseitig parallel geschalteten Frequenzteilern (33, 34) vorgesehen ist, von denen der erste (33) über seinen Ausgang mit dem Takteingang des ersten D-Flipflops (30) und über seinen Löscheingang mit einem dritten Ausgang (29) der Logik (23) und der zweite (34) über seinen Ausgang mit dem Takteingang des zweiten D-Flipflops (31) und dem Taktausgang (35) verbunden sind.

9. Empfangsseitige Anordnung nach Anspruch 8, deren Logik (23) **dadurch gekennzeichnet ist,** daß ein erstes UND-Gatter (42) vorgesehen ist, dessen erster Eingang mit dem zweiten Eingang (25) der Logik (23), dessen zweiter Eingang mit dem dritten Eingang (26) der Logik (23) und dessen Ausgang (28) mit dem Takt-Steuer(Enable)-Eingang des Aufwärts-/Abwärts-Zählers (22) verbunden sind, daß ein Inverter (41) vorgesehen ist, dessen Eingang mit dem ersten Eingang des ersten UND-Gatters (42) verbunden ist, daß ein zweites UND-Gatter (40) vorgesehen ist, dessen erster Eingang mit dem zweiten Eingang des ersten UND-Gatters (42) und dessen zweiter Eingang mit dem Ausgang des Inverters (41) verbunden ist, daß ein drittes D-Flipflop (43) vorgesehen ist, dessen D-Eingang mit dem Ausgang des zweiten UND-Gatters (40) verbunden ist und an dessen Takteingang der dritte Takt (T3) angelegt wird, daß ein viertes D-Flipflop (44) vorgesehen ist, dessen Takteingang mit dem Q-Ausgang des dritten D-Flipflops (43) verbunden ist, daß ein fünftes D-Flipflop (45) vorgesehen ist, dessen D-Eingang (24) mit dem zweiten Ausgang (19) des fünften Schieberegisters (17) verbunden ist und an dessen Takteingang der dritte Takt (T3) angelegt wird, daß ein Exklusiv-ODER-Gatter (46) vorgesehen ist, dessen erster Eingang mit dem zweiten Ausgang (19) des fünften Schieberegisters (17) und dessen zweiter Eingang mit dem Q-Ausgang des fünften D-Flipflops (45) verbunden ist, daß ein drittes UND-Gatter (47) vorgesehen ist, dessen erster Eingang mit dem Q-Ausgang des vierten D-Flipflops (44) und dessen zweiter Eingang mit dem Ausgang des Exklusiv-ODER-Gatters (46) verbunden ist, daß ein sechstes D-Flipflop (48) vorgesehen ist, dessen D-Eingang mit dem Ausgang des dritten UND-Gatters (47) verbunden ist, an dessen Takteingang der invertierende dritte Takt (T3) angelegt wird und dessen Q-Ausgang (29) mit dem Löscheingang des vierten D-Flipflops (44) und dem dritten Ausgang der Logik (23) verbunden ist.

10. Empfangsseitige Anordnung nach Anspruch 8, **dadurch gekennzeichnet,** daß ein RC-Glied derart vorgesehen ist, daß zwischen dem zweiten Ausgang (19) des fünften Schieberegisters (17) und dem D-Eingang des ersten D-Flipflops (30) der Widerstand (51) und zwischen dem D-Eingang des ersten D-Flipflops (30) und Masse über einen Schalter (52) der Kondensator (54) eingefügt sind, und daß der zweite Eingang des Exklusiv-NOR-Gatters (21) über einen Umschalter (50) nicht mit dem dritten Ausgang (20) sondern mit einem weiteren Ausgang (49) des fünften Schieberegisters (17) verbunden ist.

## Claims

1. Method for the transmission of a first digital signal (DS1) in a time slot of the pulse frame of a TDM signal for which a higher bit rate has been made available, for transmission during this time slot, than for the first digital signal (DS1), characterised in that, on the transmission side, the first digital signal (DS1) is oversampled by a first clock (T1) associated with this time slot, in that a second digital signal (DS2), obtained from the oversampling, is transmitted in the TDM signal, and in that, on the receive side and after demultiplexing, the second digital signal (DS2) is sampled by a second clock (T2), corresponding to the bit rate thereof, leaving out forbidden phase regions (VB) which, if not observed, would result in double sampling.

2. Method according to Claim 1, characterised in that, for the formation of a blocking pulse (P) which overlaps the forbidden phase regions (VB) by pulses, the second digital signal (DS2) is delayed by one period of the first clock (T1) and is further processed as a third digital signal (DS3), the second digital signal (DS2) is delayed by two periods of the first clock (T1) and is designated as a fourth digital signal (DS4), and the second (DS2) and fourth (DS4) digital signals are subjected to a non-equivalence operation.

3. Method according to Claim 1, characterised in that the second clock (T2) is derived from a third clock (T3) of the TDM signal (ZS).

4. Method according to Claim 1, 2 or 3, characterised in that a bit rate between 0.6 and 19.2 kbit/s is selected for the first digital signal (DS1), and a frequency of 64 kHz is selected for the first clock (T1).

5. Method according to Claims 3 and 4, characterised in that the second clock (T2) is derived from a 2048 kHz clock (T3a) of the TDM signal by multiplication by 3/4 (1536 kHz) and subsequent division by $2^n$, where n = 7, 8, 9, 10 and 11 (0.75 kHz, 1.5 kHz, 3 kHz, 6 kHz, 12 kHz).

6. Method according to Claims 3 and 4, characterised in that the second clock (T2) is derived from a 2048 kHz clock (T3a) of the TDM signal by multiplication by 3/4 (1536 kHz), subsequent division by five (307.2 kHz) and finally division by $2^n$, where n = 4, 5, 6, 7, 8 and 9 (0.6 kHz, 1.2 kHz, 2.4 kHz, 4.8 kHz, 9.6 kHz, 19.2 kHz).

7. Method according to one of the preceding claims, characterised in that a resynchronisation is carried out if a defined number of sampling times occur in forbidden phase regions (VB).

8. Circuit for carrying out the method according to Claim 1 or 2, using serial-parallel and parallel-serial converters, characterised in that, on the transmission side, a first shift register (3) is provided for serial-parallel conversion of the first digital signal (DS1) by the first clock (T1) and a second shift register (5) is provided subsequently for parallel-serial conversion of the second digital signal (DS2) by the third clock (T3), in the case of a channel of the TDM signal (ZS) being released,
in that, on the receive side, a third shift register (11) is provided for serial-parallel conversion of the second digital signal (DS2) by the third clock (T3),
in that a fourth shift register (13) is provided subsequently for parallel-serial conversion of the second digital signal (DS2) by the first clock (T1), in the case of a channel of the TDM signal (ZS) being released,
in that a fifth shift register (17) is provided subsequently for delaying the second digital signal (DS2) by the first clock (T1), this fifth shift register (17) having a first output (18) for the second digital signal (DS2), having a second output (19) for the third digital signal (DS3) and having a third output (20) for the fourth digital signal (DS4),
in that an exclusive NOR gate (21) is provided, the first input of which is connected to the first output (18) of the fifth shift register (17) and the second input of which is connected to the third output (20) of the fifth shift register (17),
in that an up/down counter (22) is provided, the input of which is connected to the output of the first exclusive NOR gate (21),
in that a logic circuit (23) is provided, the first input (24) of which is connected to the second output (19) of the fifth shift register (17), the second input (25) of which is connected to the output of the exclusive NOR gate (21), the third input (26) of which is connected to the maximum/minimum output of the up/down counter (22), the first output (27) of which is connected to the load input of the up/down counter (22), and the second output (28) of which is connected to the clock-enable input of the up/down counter (22),
in that a first D-flipflop (30) is provided, the D-input of which is connected to the second output (19) of the fifth shift register (17),
in that a second D-flipflop (31) is provided, the D-input of which is connected to the Q-output of the first D-flipflop (30) and the Q-output of which is used as the output (32) for a fifth digital signal (DS5), and
in that a central clock is provided, having two frequency dividers (33, 34) connected in parallel on the output side, the first (33) of which is connected via its output to the clock input of the first D-flipflop (30) and via its delete input to a third output (29) of the logic circuit (23), and the second (34) of which is connected via its output to the clock input of the second D-flipflop (31) and to the clock output (35).

9. Receive-side circuit according to Claim 8, the logic circuit (23) of which is characterised in that a first AND gate (42) is provided, the first input of which is connected to the second input (25) of the logic circuit (23), the second input of which is connected to the third input (26) of the logic circuit (23) and the output (28) of which is connected to the clock-enable input of the up/down counter (22),
in that an inverter (41) is provided, the input of which is connected to the first input of the first AND gate (42),
in that a second AND gate (40) is provided, the first input of which is connected to the second input of the first AND gate (42) and the second input of which is connected to the output of the inverter (41),
in that a third D-flipflop (43) is provided, the D-input of which is connected to the output of the second AND gate (40) and to the clock input of which the third clock (T3) is applied,
in that a fourth D-flipflop (44) is provided, the clock input of which is connected to the Q-output of the third D-flipflop (43),
in that a fifth D-flipflop (45) is provided, the D-input (24) of which is connected to the second output (19) of the fifth shift register (17) and to the clock input of which the third clock (T3) is applied,
in that an exclusive OR gate (46) is provided, the first input of which is connected to the second output (19) of the fifth shift register (17) and the second input of which is connected to the Q-output of the fifth D-flip-flop (45),
in that a third AND gate (47) is provided, the first input of which is connected to the Q-output of the fourth D-flipflop (44) and the second input of which is connected to the output of the exclusive OR gate (46), and in that a sixth D-flipflop (48) is provided, the D-input of which is connected to the output of the third AND gate (47), to the clock input of which the inverting third clock (T3) is applied, and the Q-output (29) of which is connected to the delete input of the fourth D-flipflop (44) and to the third output of the logic circuit (23).

10. Receive-side circuit according to Claim 8, characterised in that an RC-element is provided in such a way that the resistor (51) is inserted between the second output (19) of the fifth shift register (17) and the D-input of the first D-flipflop (30), and the capacitor (54) is inserted between the D-input of the first D-flipflop (30) and earth, via a switch (52), and in that the second input of the exclusive NOR gate (21) is connected via a switching unit (50) not to the third output (20), but to a further output (49) of the fifth shift register (17).

**Revendications**

1. Procédé pour transmettre un premier signal numérique (DS1) dans un créneau temporel de la trame d'impulsions d'un signal de multiplexage temporel, pour lequel on dispose, pour la transmission dans ce créneau tempore, d'une cadence binaire supérieure à celle du premier signal numérique (DS1), caractérisé par le fait que le premier signal numérique (DS1) est échantillonné, côté émission, au moyen d'une première cadence (T1) associée à ce créneau temporel, qu'un second signal numérique (DS2) obtenu à partir de l'échantillonnage est transmis dans le signal de multiplexage temporel, et que, côté réception, après un démultiplexage, le second signal numérique (DS2) est échantillonné au moyen d'une seconde cadence (T2) correspondant à sa cadence binaire, moyennant la suppression de plages interdites (VB) de positions de phase, des échantillonnages doubles étant susceptibles de se produire si l'on ne réalise pas cette suppression.

2. Procédé suivant la revendication 1, caractérisé par le fait que pour la formation d'une impulsion (P) bloquant avec chevauchement les moyens d'impulsions, les plages interdites (VB) des positions de phase, le second signal numérique (DS2) est retardé d'une période de la première cadence (T1) et continue à être traité en tant que troisième signal numérique (DS3), que le second signal numérique (DS2) est retardé de deux périodes du signal (T1) et est désigné sous le terme de quatrième signal numérique (DS4) et que le second signal numérique (DS2) et le quatrième signal numérique (DS4) sont soumis à une combinaison d'antivalence.

3. Procédé suivant la rvendication 1, caractérisé par le fait que la seconde cadence (T2) est dérivée d'une troisième cadence (T3) du signal de multiplexage temporel (ZS).

4. Procédé suivant la revendication 1, 2 ou 3, caractérisé par le fait que pour le premier signal numérique (DS1), on choisit une cadence binaire comprise entre 0,6 et 19,2 kbits/s et pour la première cadence (T1) une fréquence égale à 64 kHz.

5. Procédé suivant les revendications 3 et 4, caractérisé par le fait que la seconde cadence (T2) est dérivée d'une cadence à 2048 kHz (T3a) du signal de multiplexage temporel, par multiplication par 3/4 (1536 kHz) et division ultérieure par $2^n$ avec n = 7, 8, 9, 10 et 11 (0,75 kHz, 1,5 kHz, 3 kHz, 6 kHz, 12 kHz).

6. Procédé suivant les revendications 3 et 4, caractérisé par le fait que la seconde cadence (T2) est dérivée d'une cadence à 2048 kHz (T3a) du signal de multiplexage temporel, par multiplication par 3/4 (1536 kHz), division ultérieure par cinq (307,2 kHz) et division ultérieu-re par $2^n$ avec n = 4, 5, 6, 7, 8 et 9 (0,6 kHz, 1,2 kHz, 2,4 kHz, 4,8 kHz, 9,6 kHz, 19,2 kHz).

7. Procédé suivant l'une des revendications précédentes, caractérisé par le fait que dans le cas où un nombre défini de points d'échantillonnage tombe dans des plages interdites (VB) de positions de phase, on réalise une nouvelle synchronisation.

8. Dispositif pour la mise en oeuvre du procédé suivant la revendication 1 ou 2, moyennant l'utilisation de convertisseur série-parallèle et parallèle-série, caractérisé par le fait qu'il est prévu, côté émission, un premier registre à décalage (3) pour une conversion série-parallèle du premier signal numérique (DS1) avec une première cadence (T1), puis un second registre à décalage (5) pour une conversion parallèle-série du second signal numérique (DS2) avec la troisième cadence (T3) dans le cas où le canal du signal de multiplexage temporel (ZS) est libéré,

qu'il est prévu, côté réception, un troisième registre à décalage (11) pour une conversion série-parallèle du second signal numérique (DS2) avec la troisième cadence (T3),

qu'il est en outre prévu un quatrième registre à décalage (13) pour une conversion parallèle-série du second signal numérique (DS2) avec la première cadence (T1) lorsque le canal du signal de multiplexage temporel (ZS) est libéré,

qu'il est en outre prévu un cinquième registre à décalage (17) pour un retardement du second signal numérique (DS2) avec une première cadence (T1), comportant une première sortie (18) pour le second signal numérique (DS2), une seconde sortie (19) pour le troisième signal numérique (DS3) et une troisième sortie (20) pour le quatrième signal numérique (DS4),

qu'il est prévu une porte NON-OU-Exclusif (21), dont la première entrée est raccordée à la première sortie (18) du cinquième registre à décalage (17), dont la seconde entrée est raccordée à la troisième sortie (20) de ce registre,

qu'il est prévu un compteur progressif/régressif (22), dont l'entrée est raccordée à la sortie de la première porte NON-OU-Exclusif (21),

qu'il est prévu un circuit logique (23), dont la première entrée (24) est raccordée à la seconde sortie (19) du cinquième registre à décalage (17), dont la seconde entrée (25) est raccordée à la sortie de la porte NON-OU-Exclusif (21), dont la troisième entrée (26) est raccordée à la sortie maximum/minimum du compteur progressif/régressif (22), et dont la première sortie (27) est raccordée à l'entrée de positionnement (chargement) du compteur progressif/régressif (22) et dont la seconde sortie (28) est raccordée à l'entrée de commande de cadence (validation) du compteur progressif/régressif (22),

il est prévu une première bascule bistable de type D (30), dont l'entrée D est raccordée à la seconde sortie (19) du cinquième registre à décalage (17),

qu'il est prévu une seconde bascule bistable de type D (31), dont l'entrée D est raccordée à la sortie Q de la première bascule bistable de type D (30) et dont la sortie Q est utilisée comme sortie (32) pour un cinquième signal numérique (DS5), et

qu'il est prévu une unité centrale délivrant la cadence, qui comporte deux diviseurs de fréquence (33,34) branchés en parallèle côté sortie et dont le premier (33) est raccordé par l'intermédiaire de sa sortie à l'entrée de cadence de la première bascule bistable de type D (30) et, par l'intermédiaire de son entrée de remise à zéro, à une troisième sortie (29) du circuit logique (23), tandis que le second diviseur de fréquence (34) est raccordé par sa sortie à l'entrée de cadence de la seconde bascule bistable du type D (31) et à la sortie de cadence (35).

9. Dispositif situé côté réception, suivant la revendication 8, dont le circuit logique (23) est caractérisé par le fait

qu'il est prévu une première porte ET (42), dont la première entrée est raccordée à la seconde entrée (25) du circuit logique (23), et dont la seconde entrée est raccordée à la troisième entrée (26) du circuit logique (23) et dont la sortie (28) est raccordée à l'entrée de commande (validation) de cadence du compteur progressif/régressif (22),

qu'il est prévu un inverseur (41), dont la sortie est qu'il est prévu une seconde porte ET (40), dont la première entrée est raccordée à la seconde entrée de la première porte ET (42) et dont la seconde entrée est raccordée à la sortie de l'inverseur (41),

qu'il est prévu une troisième bascule bistable de type D (43), dont l'entrée D est raccordée à la sortie de la seconde porte ET (40) et à l'entrée de cadence de laquelle est appliquée la troisième cadence (T3),

qu'il est prévu une quatrième bascule bistable de type D (44), dont l'entrée de cadence est raccordée à la sortie Q de la troisième bascule bistable de type D (43),

qu'il est prévu une cinquième bascule bistable de type D (45), dont l'entrée D (24) est raccordée à la seconde sortie (19) du cinquième registre à décalage (17) et à l'entrée de cadence de laquelle est appliquée, la troisième cadence (T3),

qu'il est prévu un circuit OU-Exclusif (46), dont la première entrée est raccordée à la seconde sortie (19) du cinquième registre à décalage (17) et dont la seconde entrée est raccordée à la sortie Q de la cinquième bascule bistable de type D (45), qu'il est prévu une troisième porte ET (47), dont la première entrée est raccordée à la sortie Q de la quatrième bascule bistable de type D (44) et dont la seconde entrée est raccordée à la sortie de la porte OU-Exclusif (46),

qu'il est prévu une sixième bascule bistable de type D (48), dont l'entrée D est raccordée à la sortie de la troisième porte ET (47), à l'entrée de cadence de laquelle est appliquée la troisième cadence inverseuse (T3) et dont la sortie Q (29) est raccordée à l'entrée de remise à l'état initial de la quatrième bascule bistable de type D (44) et à la troisième sortie du circuit logique (23).

10. Dispositif situé côté réception suivant la revendication 8, caractérisé par le fait qu'il est prévu un circuit RC tel que la résistance (51) est branchée entre la seconde sortie (19) du cinquième registre à décalage (17) et l'entrée D de la première bascule bistable de type D (30) et que le condensateur (54) est inséré entre l'entrée D de la première bascule bistable de type D (30) et la masse, par l'intermédiaire d'un interrupteur (52), et que la seconde entrée de la porte NON-OU-Exclusif (21) est raccordée par l'intermédiaire d'un commutateur (50) non pas à la troisième sortie (20), mais à une autre sortie (49) du cinquième registre à décalage (17).

## FIG 1

| | |
|---|---|
| DS1 | 19,2 kbit/s |
| T1 | 64 kHz |
| DS2 | 19,2 kbit/s |
| T2a | 19,2 kHz |
| T2b | 19,2 kHz |

BF          BF

## FIG 2

| | |
|---|---|
| DS2 | |
| T2c,d | |

→| |←10,4 µs    ＼VB      ----T2c      ·······T2d

## FIG 3

| | |
|---|---|
| DS2 | |
| DS4 | ←31,2µs→ |
| DS3 | ←15,6µs→ |
| P | |
| VB | |

→| |←10,4µs

FIG 4a

FIG 4b

# FIG 5

42

28

23

41  40  43  44

25  D  Q  "H"  D  Q

26  "H"

T3  "H"  PRE
"H"  CLR  CLR
"H"  PRE  Q̄

27

45  46  47  48

24  D  Q  T3̄  D  Q  29

T3  "H"  CLR
"H"  CLR  "H"  PRE
"H"  PRE

# FIG 7

BF

DS3

P  15,6 µs

109,37 µs

T2 max

UC

$$DS1 = 4,8\,kHz \qquad\qquad T2\,max = \frac{1}{2(109,34 - 15,6)\mu s} = 5,3\,kHz$$

# FIG 6